# EUROPÄISCHE PATENTSCHRIFT

(11) **EP 2 392 902 B1**
(45) Veröffentlichungstag und Bekanntmachung des Hinweises auf die Patenterteilung: **09.08.2017**
(21) Anmeldenummer: 10005742.1
(22) Anmeldetag: 02.06.2010
(51) Int. Cl.: G01K 1/02, G01K 1/14, G01K 15/00, F25D 29/00

(54) **Sensoranordnung, Lagervorrichtung umfassend eine Sensoranordnung und Verfahren zur Kalibrierung einer solchen**
Sensor system, storage device including a sensor system and method for calibrating same
Agencement de capteur, dispositif de stockage comprenant un agencement de capteur et procédé de calibrage destiné au calibrage de celui-ci

(43) Veröffentlichungstag der Anmeldung: 07.12.2011
(73) Patentinhaber: B Medical Systems S.à r.l., 9809 Hosingen (LU)
(72) Erfinder: Jakoby, Rainer, 54689 Daleiden (DE); Pinto, Admilson, 54298 Aach (DE); Girrens, Nico, 9839 Rodershausen (LU); Billen, Stephen, 54634 Bitburg (DE)
(74) Vertreter: Farmer, Guy Dominic

(56) Entgegenhaltungen:
- EP-A1- 0 565 925
- WO-A1-02/37399
- WO-A1-2009/052641
- JP-A- 2007 078 588
- US-A- 5 792 951

## Beschreibung

Die Erfindung betrifft eine Sensoranordnung, umfassend mindestens einen Sensor, insbesondere Temperatursensor, eine, die Messelektronik beinhaltende Messeinheit, insbesondere Temperaturmesseinheit, und eine Erfassungs- und Kommunikationseinheit, wobei der mindestens eine Sensor mit der Messeinheit über eine erste Kabelverbindung verbindbar ist und die Messeinheit mit der Erfassungs- und Kommunikationseinheit über eine zweite Kabelverbindung verbindbar ist, gemäß dem Patentanspruch 1. Darüber hinaus betrifft die Erfindung eine Lagervorrichtung, insbesondere eine Kühlvorrichtung zur Einlagerung von Blutprodukten, umfassend ein wärmeisoliertes Gehäuse mit einer mittels einer wärmeisolierten Tür verschließbaren Zugangsöffnung und mindestens einem Wärmeaggregat, wobei das Gehäuse einen Lagerraum umschließt und im Inneren des Gehäuses mindestens eine Lagereinrichtung, vorzugsweise in Form einer ausziehbaren Schublade, vorgesehen ist, gemäß dem Oberbegriff des Patentanspruchs 11. Weiter betrifft die Erfindung ein Verfahren zur Kalibrierung der Sensoranordnung nach Patentanspruch 15. Aus dem Stand der Technik sind bereits Sensoranordnungen mit mindestens einem Sensor und einer Messeinheit bekannt. Dabei sind üblicherweise die Sensoren mit der Messeinheit über eine Kabelverbindung verbunden. Die Messeinheit selbst umfasst die Messelektronik. Dabei sind die Enden der Kabelverbindung, welche an die Sensoren angeschlossen ist, direkt an die Temperaturmess- und Auswerteeinheit angeschlossen. Eine solche Sensoranordnung ist beispielsweise aus der EP 0 565 925 A1 bekannt.

Ferner sind aus dem Stand der Technik Sensoranordnungen mit einer zusätzlichen Erfassungs- und Kommunikationseinheit bekannt. Die Messelektronik kann bei derartigen Anordnungen über eine Kabelverbindung mit der Erfassungs- und Kommunikationseinheit verbunden sein
Aus dem Stand der Technik bekannte Lagervorrichtungen, beispielsweise Kühlvorrichtung oder Inkubatoren können dabei eine derartige Sensoranordnung aufweisen. Die Sensoranordnung dient dabei der Erfassung der Temperaturen im Innraum der Lagervorrichtung. Üblicherweise sind dabei mehrere Sensoren im Inneren der Lagervorrichtung derart verteilt, dass alle relevanten Bereiche des Innenraumes mittels der Sensoren überwacht werden können.

Um die entsprechenden Normen für Lagervorrichtungen, insbesondere bei der Verwendung als Kühlvorrichtung im medizinischen Bereich, beispielsweise bei der Einlagerung von Blutprodukten, einhalten zu können, sind gewisse Kriterien an die Temperaturverteilungen im Inneren der Lagervorrichtung zu stellen. Insofern ist es wesentlich, die Temperaturverteilung bzw. ihre Veränderung über die Zeit mittels der entsprechenden Sensoren im Detail zu messen und zu verfolgen, um einer schädlichen Veränderung der Temperatur reagieren zu können und eine entsprechende Steuerungsmaßnahme zur Temperaturerhöhung bzw. -erniedrigung einzuleiten.

Um die Funktionsfähigkeit der Sensoren, der Messelektronik und der Erfassungs- und Kommunikationseinheit zu gewährleisten, ist eine regelmäßige Wartung, aber auch eine regelmäßige Kalibrierung der Sensoranordnung notwendig. Hierdurch soll sichergestellt werden, dass die Funktionsfähigkeit in jedem Fall gegeben ist und die resultierenden Messergebnisse der Realität entsprechen.

Möchte der Nutzer der Lagervorrichtung nun eine Kalibrierung der gesamten Sensoranordnung, umfassend die Sensoren, die Messelektronik sowie die Erfassungs- und Kommunikationseinheit durchführen, so besteht die Möglichkeit, entweder die Sensoren eines weiteren kalibrierten Messsystems an der gleichen Stelle der Sensoren der Lagervorrichtung zu platzieren und eine Vergleichsmessung durchzuführen, oder alternativ die gesamte Sensoranordnung auszutauschen. In jedem Fall stellt dies ein sehr aufwändiges Verfahren dar und das zuständige Wartungspersonal bzw. der Messtechniker muss in jedem Fall vor Ort an der Lagervorrichtung arbeiten. Zudem muss der Nutzer der Lagervorrichtung das gesamte eingelagerte und temperaturempfindliche Lagergut oder zumindest Teile davon vor der Kalibrierung aus der Lagervorrichtung entfernen, um eine Beschädigung desselben zu vermeiden. Dies wird umso umständlicher, je mehr Sensoren die Sensoranordnung aufweist.

Vor diesem Hintergrund ist es die Aufgabe der Erfindung, eine Sensoranordnung vorzuschlagen, deren Neujustierung und Kalibrierung durch einfache Maßnahmen und ohne großen Zeitaufwand, kostengünstig durchgeführt werden kann. Ferner ist es Aufgabe der Erfindung, eine entsprechende Lagervorrichtung vorzuschlagen, die die Nachteile des Standes der Technik überwindet. Letztlich ist es Aufgabe der Erfindung, ein entsprechendes Verfahren zur Kalibrierung einer solchen Sensoranordnung vorzuschlagen.

Der gegenständliche Teil der Aufgabe wird durch eine Sensoranordnung mit den Merkmalen von Patentanspruch 1 sowie Patentanspruch 11 gelöst. Der verfahrensmäßige Teil der Aufgabe wird durch ein Verfahren zur Kalibrierung der Sensoranordnung gemäß Patentanspruch 15 gelöst. Die Unteransprüche zeigen vorteilhafte Ausführungsformen und Weiterbildungen der Erfindung auf.

Erfindungsgemäß wird vorgeschlagen, die erste Kabelverbindung, welche den mindestens einen Sensor mit der Messeinheit verbindet, in einen ersten Kabelabschnitt und einen zweiten Kabelabschnitt zu trennen, wobei der erste Kabelabschnitt mit dem zweiten Kabelabschnitt mittels einer lösbaren Steckverbindung verbindbar ist. Durch Einbringen einer derartigen Steckverbindung wird ein Trennen des mindestens einen Sensors von der Messeinheit möglich, wodurch in vorteilhafter Weise der mindestens eine Sensor von der Messeinheit sowie der Erfassungs- und Kommunikationseinheit separiert und durch einen anderen kalibrierten Sensor ausgetauscht werden kann. Vorteilhafterweise wird dabei ein werksseitig kalibrierter neuer Sensor an die Messeinheit angeschlossen, so dass der weitere funktionsgemäße Betrieb in den vordefinierten Regelgrenzen in jedem Fall gewährleistet ist. Darüber hinaus kann durch ein Abtrennen des mindestens einen Sensors von der Messeinheit und des dadurch frei werdenden Anschlusses der Messeinheit über einen separaten Kalibrierstecker ebenfalls eine Kalibrierung des Restsystems bestehend aus dem weiblichen Stecker, dem zweiten Kabelabschnitt, der Messeinheit sowie der Erfassungs- und Kommunikationseinheit erfolgen. Gemäss der Erfindung weist die Steckverbindung einen männlichen Stecker und einen weiblichen Stecker auf, wobei der männliche Stecker dem ersten Kabelabschnitt und der weibliche Stecker dem zweiten Kabelabschnitt zugeordnet ist. Vorteilhafterweise ist der männliche Stecker mit dem weiblichen Stecker über eine Rasteinrichtung verbindbar ist, so dass ein ungewolltes Trennen der Steckverbindung wirksam vermieden wird. Denkbar ist insbesondere auch der Einsatz eines Bajonett- Verschlusses zur schnellen und wirksamen Verbindung des männlichen mit dem weiblichen Stecker.

Vorteilhafterweise ist die Steckverbindung als Stecker mit einem geringen elektrischen Widerstand ausgebildet um jeglichen Störeinfluss auf die Messdaten zu vermeiden.

Der erste Kabelabschnitt der ersten Kabelverbindung ist mit dem mindestens einen Sensor und der der zweite Kabelabschnitt der ersten Kabelverbindung mit der Messeinheit verbunden, wobei der erste Kabelabschnitt kürzer als der zweite Kabelabschnitt ausgebildet ist und vorzugsweise eine maximale Länge von 50 cm aufweist. Die Länge des zweiten Kabelabschnitts ist derart gewählt, dass die Positionierung des Sensors an der vordefinierten Position im Messbereich erfolgen kann.

Die Messeinheit weist nach einer erfindungsgemäßen Weiterbildung des Erfindungsgegenstandes eine Mehrzahl an Steckplätzen zum Anschluss einer Mehrzahl von Sensoren, insbesondere von neun Sensoren, auf. Die Anzahl der Sensoren variiert dabei mit der gewünschten Genauigkeit der Messung und Überwachung des Messbereichs.

Die Messeinheit und die Erfassungs- und Kommunikationseinheit weisen jeweils einen USB- Anschluss auf. Mittels der zweiten Kabelverbindung ist damit eine lösbare USB- Verbindung zwischen der Messeinheit und der Erfassungs- und Kommunikationseinheit herstellbar.

Unter "USB" wird im Sinne der Anmeldung der internationale Standard "Universal Serial Bus" verstanden, welcher allgemein bekannt ist und Eingang in die heutige Informationstechnologie gefunden hat. Dabei ist unter Universal Serial Bus, oder auch USB, eine Verbindung zwischen zwei Geräten über ein serielles Bus-System zu verstehen, wobei im laufenden Betrieb Geräte miteinander verbunden sowie voneinander getrennt werden können, wobei angeschlossene Geräte, sowie deren Eigenschaften automatisch erkannt werden.

Die Erfassungs- und Kommunikationseinheit umfasst zudem einen kabelgebundenen Ethernet- Anschluss (LAN- Anschluss) und/ oder einen kabellosen Anschluss (WLAN- Anschluss) zur Verbindung der Erfassungs- und Kommunikationseinheit mit einem Rechner oder einem Netzwerk. Vorteilhafterweise kann somit bidirektional mit der der Erfassungs- und Kommunikationseinheit kommuniziert werden. Zudem ist mindestens ein weiterer USB- Anschluss zum Anschluss von externen Geräten vorgesehen.

Die Erfassungs- und Kommunikationseinheit beinhaltet eine Speichereinheit zur Aufzeichnung und Zwischenspeicherung von Informationen. Diese können in vorteilhafter Weise über den kabelgebundenen Ethernet- Anschluss (LAN- Anschluss) und/ oder den kabellosen Anschluss (WLAN- Anschluss) ausgelesen werden. So wird eine Ansteuerung der Erfassungs- und Kommunikationseinheit im Rahmen einer Fernwartung insbesondere durch das Internet möglich.

Zur Bedienung der Erfassungs- und Kommunikationseinheit und zum Auslesen der darin gespeicherten Daten und Informationen ist zudem eine Anzeigevorrichtung zur Anzeige von aufgezeichneten und zwischengespeicherten Informationen vorgesehen. Dies ermöglicht eine direkte Abfrage der Information vor Ort.

Die Sensoranordnung weist mindestens einen Kalibrierstecker auf, wobei der mindestens eine Kalibrierstecker mit dem weiblichen Stecker der Steckverbindung lösbar verbindbar ist. Der mindestens eine Kalibrierstecker ist dabei mit einem integrierten Präzisionswiderstand versehen.

Die erfindungsgemäße Lagervorrichtung kann insbesondere als Kühlvorrichtung zur Einlagerung von Blutprodukten ausgestaltet sein. Die Lagervorrichtung umfasst ein wärmeisoliertes Gehäuse mit einer mittels einer wärmeisolierten Tür verschließbaren Zugangsöffnung und mindestens einem Wärmeaggregat. Als Wärmeaggregat wird im Sinne der Anmeldung sowohl ein Hitze erzeugendes, also einen positiven Wärmestrom, als auch ein Kälte erzeugendes, also einen negativen Wärmestrom, Aggregat verstanden. Das Gehäuse umschließt einen Lagerraum und im Inneren des Gehäuses ist mindestens eine Lagereinrichtung, vorzugsweise in Form einer ausziehbaren Schublade, vorgesehen. Erfindungsgemäß ist die Lagervorrichtung mit der erfindungsgemäßen Sensoranordnung ausgestattet.

Im Inneren des Gehäuses ist mindestens ein ausziehbarer Sensoreinschub, vorzugsweise gebildet in Form einer Lochplatte, vorgesehen. Dabei weist der mindestens eine Sensoreinschub mindestens eine Sensorhalterung zur lösbaren Halterung des mindestens einen Sensors auf. Die Halterung kann dabei durch eine einfache Bohrung in dem Sensoreinschub, in welche der Sensor eingeschoben wird ausgebildet sein. Alternativ ist kann auch eine Rastvorrichtung vorgesehen sein, in welche der Sensor eingerastet wird. Auch andere Gestaltungen sind denkbar, wobei der Sensor jedoch in jedem Fall von dem Sensoreinschub lösbar sein muss
Die zweite Kabelverbindung mit dem weiblichen Stecker, die Messeinheit und die Erfassungs- und Kommunikationseinheit sind dagegen in dem Gehäuse der Lagervorrichtung fest angeordnet.

Das erfindungsgemäße Verfahren zur Kalibrierung der Sensoranordnung umfasst die in Anspruch 15 definierten Verfahrensschritte. Die Erfindung ist nachfolgend anhand eines in den Figuren dargestellten Ausführungsbeispiels näher erläutert. Es zeigen:
- Fig. 1: die erfindungsgemäße Sensoranordnung;
- Fig. 2: die erfindungsgemäße Steckverbindung mit daran angeschlossenem Sensor;
- Fig. 3: die erfindungsgemäße Steckverbindung mit davon separiertem Sensor;
- Fig. 4: die erfindungsgemäße Lagervorrichtung mit ausgezogener Lagereinrichtung;
- Fig. 5a, 5b: die erfindungsgemäße Lagervorrichtung mit ausgezogener Lagereinrichtung und ausgezogenem Sensoreinschub;
- Fig. 6 bis 11: das erfindungsgemäße Verfahren zum Kalibrieren der zweiten Kabelverbindung, der Messeineinheit und der Erfassungs- und Kommunikationseinheit; und
- Fig. 12 bis 16: das erfindungsgemäße Verfahren zur Kalibrierung des mindestens eines Sensors, der ersten Kabelverbindung, der Steckverbindung, der zweiten Kabelverbindung, der Messeineinheit und der Erfassungs- und Kommunikationseinheit.

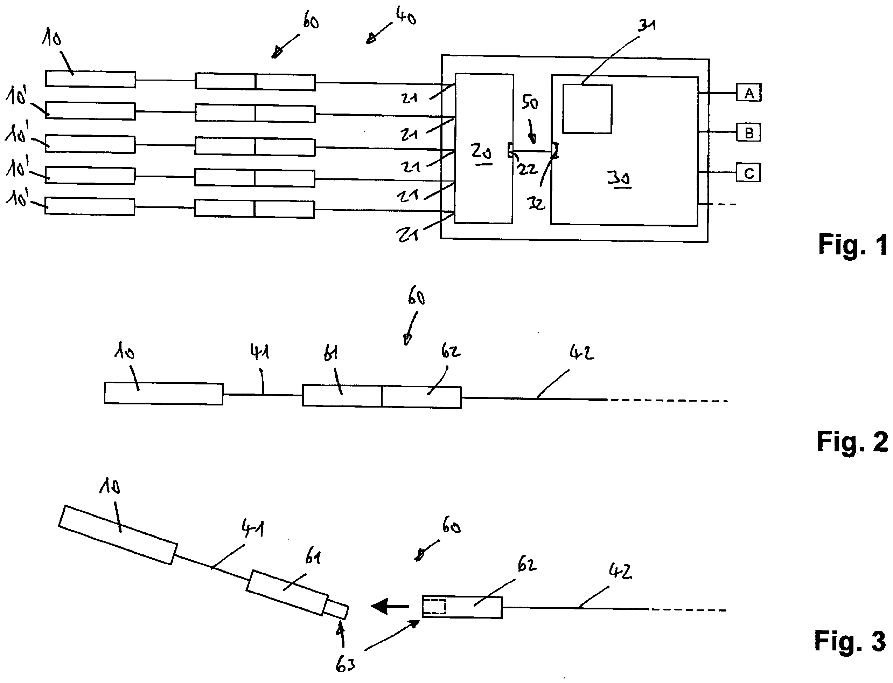

Die in Fig. 1 gezeigte Sensoranordnung 1 weist einen ersten Sensor 10 sowie vier weitere Sensoren 10' zur Erfassung einer Temperatur in einem Lagerraum auf. Die Sensoren 10, 10' sind über eine erste Kabelverbindung 40 mit einer Messeinheit 20 verbunden. Die erste Kabelverbindung 40 weist dabei, wie in Fig. 2 gezeigt, einen ersten Kabelabschnitt 41 und einen zweiten Kabelabschnitt 42 auf. Der erste Kabelabschnitt 40 ist dabei getrennt von dem zweiten Kabelabschnitt 42 ausgebildet. Die beiden Kabelabschnitte 41 und 42 sind dabei über eine Steckverbindung 60 verbunden. Die Steckverbindung weist einen männlichen Stecker 61 und einen weiblichen Stecker 62 auf. Der männliche Stecker ist dabei mit Hilfe einer Asteinrichtung 63 mit dem weiblichen Stecker 62 derart verbunden, dass ein selbständiges Lösen wirksam unterbunden wird.

Die Messeinheit 20 ist ferner über eine zweite Kabelverbindung 50 mit einer Erfassungs- und Kommunikationseinheit 30 verbunden. Die zweite Kabelverbindung 50 ist dabei als USB Verbindung ausgestaltet. Dabei weist sowohl die Messeinheit 20 als auch die Erfassungs- und Kommunikationseinheit 30 einen USB- Anschluss auf, so dass die Messeinheit 20 mit der Erfassungs- und Kommunikationseinheit 30 mittels eines USB- Kabels verbunden werden kann.

Zum Anschluss der ersten Kabelverbindung an die Messeinheit weist diese darüber hinaus eine Mehrzahl von Steckplätzen 21 auf. Im vorliegenden Ausführungsbeispiel ist an den Steckplätzen 21 eine Anzahl von fünf Sensoren 5, 10, 10' angeschlossen, wobei die Anzahl der Sensoren 10, 10' je nach Bedarf variieren kann.

Die Erfassungs- und Kommunikationseinheit 30 weist ebenfalls eine Mehrzahl von Anschlüssen auf, insbesondere einen Ethernetanschluss A zur Verbindung der Erfassungs- und Kommunikationseinheit 30 mit einem externen Rechner oder einem externen Netzwerk. Unter Ethernet ist dabei eine Technik für ein kabelgebundenes Datennetz zu verstehen. Gleichwohl kann der Anschluss zum Verbinden der Erfassungs- und Kommunikationseinheit an einen separaten Rechner bzw. ein separates Netzwerk auch kabellos über eine so genannte WLAN- Verbindung erfolgen. Die Erfassungs- und Kommunikationseinheit 30 weist ferner einen USB- Anschluss B zum Anschluss von externen Geräten auf. Zudem ist eine Anzeigevorrichtung C an die Erfassungs- und Kommunikationseinheit angeschlossen, um die durch die Erfassungs- und Kommunikationseinheit 30 verarbeiteten Informationen entsprechend anzeigen zu können. Darüber hinaus weist die Erfassungs- und Kommunikationseinheit 30 eine Speichereinheit 31 zur Aufzeichnung und Zwischenspeicherung von Informationen auf, die ebenfalls über die Anzeigevorrichtung C angezeigt werden können. Die Speichereinheit 31 dient dabei der Speicherung von Kalibrierungsdaten bzw. von den Sensoren erfassten Messwerten, bevor diese an eine Auslesevorrichtung (nicht gezeigt) weitergegeben werden.

Die Steckverbindung 60 ist dabei durch Abziehen des männlichen Steckers 61 von dem weiblichen Stecker 62, wie in Fig. 3 gezeigt, trennbar. Insofern kann der Sensor 10 samt dem ersten Kabelabschnitt 41 und dem männlichen Stecker 61 von dem zweiten Kabelabschnitt 42 und dem weiblichen Stecker 61, verbunden mit der Messeinheit 20, getrennt werden. Die Rastvorrichtung 63 ist dabei derart gestaltet, dass sie ein ungewolltes Lösen des männlichen Steckers 61 vom weiblichen Stecker 62 wirksam verhindert. Dies kann beispielsweise auch über einen Bajonettverschluss erfolgen.

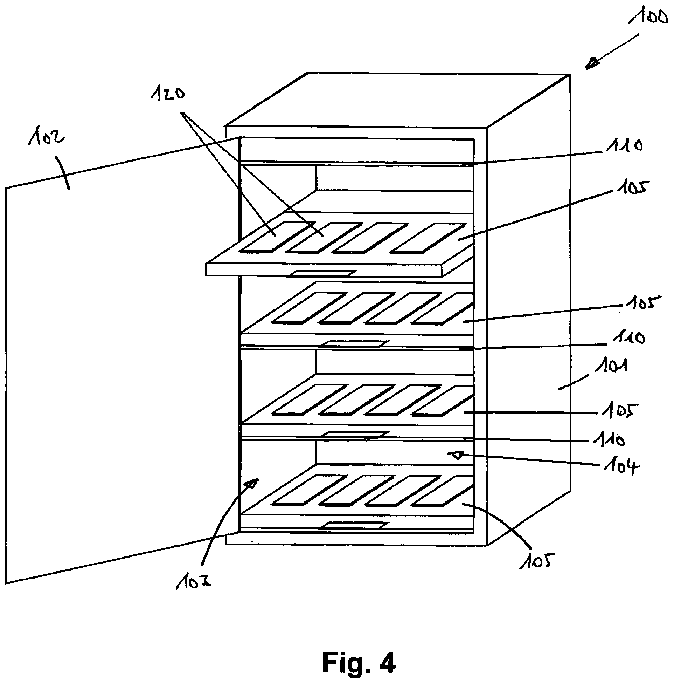

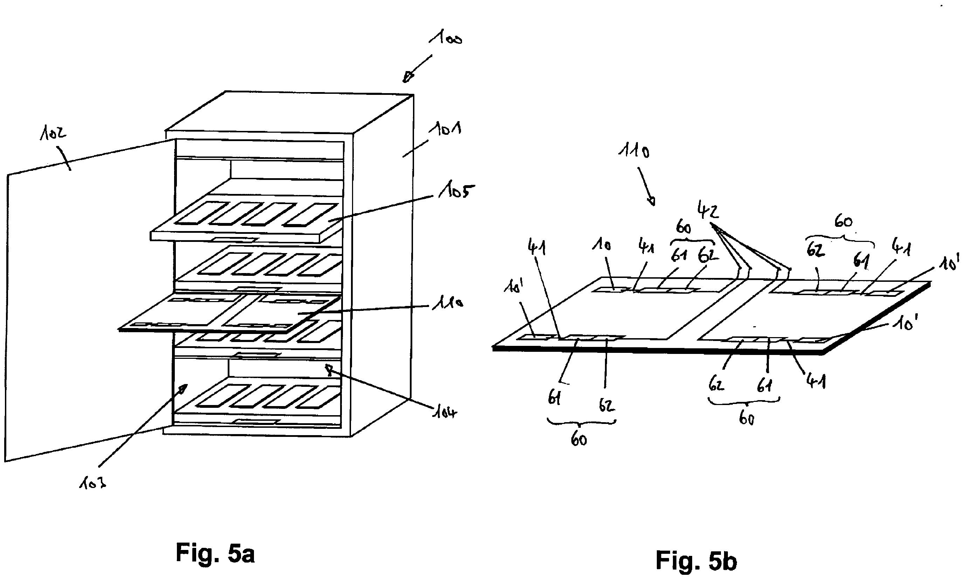

Die Lagervorrichtung, wie in Fig. 4, 5a und 5b gezeigt, weist ein Gehäuse 100 auf, welches einen Lagerraum 104 umschließt. Die Zugangsöffnung 103 des Gehäuses 101 ist mit einer wärmeisolierten Tür 102 verschließbar. Im Inneren des Gehäuses 101 sind vier Lagereinrichtungen 105 angeordnet. Die Lagereinrichtungen 105 sind schubladenförmig ausgebildet und aus der Zugangsöffnung 103 des Gehäuses 101 ausfahrbar. Die Lagereinrichtungen 105 dienen dabei der Ablage von einzulagernden Gegenständen 120, wie beispielsweise Blutprodukten, wie Blutplasma oder dergleichen.

Neben den Lagereinrichtungen 105 sind Sensoreinschübe 110 vorgesehen, welche ebenfalls schubladenartig aus dem Inneren des Gehäuses 101 durch die Zugangsöffnung 103 herausgezogen werden können. Diese sind in seitlichen Führungsschienen (nicht gezeigt) beweglich gehaltert, so dass diese auf einfach Art und Weise zugänglich und bewegbar sind. In ihrer eingefahrenen Position sind die Sensoreinschübe 110 durch eine Rastvorrichtung (nicht gezeigt) in der Art gesichert, dass ein selbständiges Ausfahren der Sensoreinschübe 110 wirksam unterbunden wird. Die Sensoreinschübe 110 sind dabei oberhalb des jeweiligen zu überwachenden Arbeitsvolumens angebracht, wie in Fig. 5 gezeigt. Die Sensoren 10, 10' sind, wie in Fig. 5b gezeigt, in entsprechenden Sensorhalterungen 111 lösbar festgelegt, so dass sich deren Position beim Bewegen des Sensoreinschubes 110 während des Ein- und Ausfahrens nicht verändern kann. Dabei sind die Positionen der Sensorhalterungen 111 derart gewählt, dass eine aufgabengemäße Erfassung der Temperaturen im Inneren des Gehäuses 101 der Lagervorrichtung 100 gewährleistet ist. Auf dem jeweiligen Sensoreinschub 110 sind dabei weiterhin angeordnet der erste Kabelabschnitt 41 sowie die Steckverbindung 60 als auch der zweite Kabelabschnitt 42, wobei dieser den einzelnen Sensoreinschub 110 zur Rückwand des Gehäuses hin verlässt, um dort in einem Sammelkanal (nicht gezeigt) mit dem zweiten Kabelabschnitten 41 der weiteren Kabelverbindungen 40 der zusätzlichen Sensoren 10, zusammen zur Messeinheit 20 (nicht gezeigt in Fig. 5b) geführt zu werden. Der auf dem jeweiligen Sensoreinschub 110 befindliche Abschnitt des zweiten Kabelabschnitts 41 und der weibliche Stecker 62 sind dabei in ihrer Position auf den jeweiligen Sensoreinschub 110 fixiert.

Der einzelne Sensoreinschub 110 ist dabei zur Gewichtseinsparung in Form eines dünnen Lochbleches (nicht gezeigt) ausgebildet. Zudem ist eine Rückholvorrichtung vorgesehen (nicht gezeigt), die den Sensoreinschub 110 automatisch in das Gehäuse 101 einzieht, sobald diese vom Nutzer freigegeben wird.

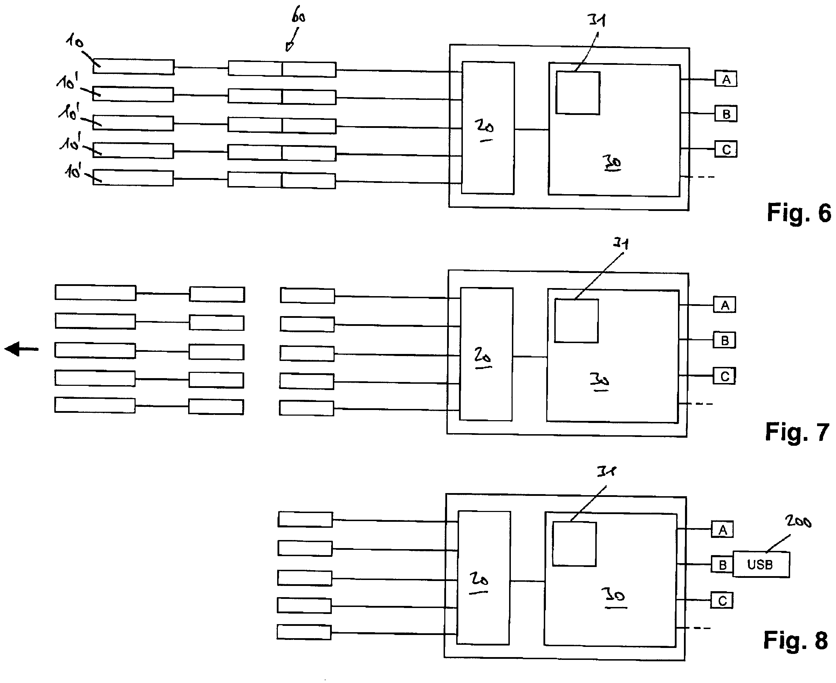

In den Fig. 6 bis 11 ist das erfindungsgemäße Verfahren zum Kalibrieren der Sensoranordnung, den weiblichen Stecker 62, den zweiten Kabelabschnitt 42, die Messeinheit sowie die Erfassungs- und Kommunikationseinheit umfassend, dargestellt. Im Weiteren soll diese Anordnung als Restsystem bezeichnet werden.

Dabei sind zunächst die Sensoren 10, 10' an das Restsystem über die Steckverbindungen 60 angeschlossen. Es erfolgt ein Regelbetrieb der Sensoranordnung 1, wobei die Sensoren 10, 10' die Temperaturwerte im Inneren der Lagervorrichtung 100 erfassen und an die Messeinheit 20 weiterleiten. Die Messeinheit 20 transferiert die Messdaten an die Erfassungs- und Kommunikationseinheit, welche diese über den Ethernetanschluss A bzw. eine WLAN- Verbindung an eine externe Abfragestelle (nicht gezeigt) transferiert. In regelmäßigen Abständen oder im Falle einer detektierten Störung des Systems ist die Sensoranordnung neu zu justieren bzw. zu kalibrieren.

Nach einer ersten Ausführungsform des erfindungsgemäßen Verfahrens erfolgt diese Kalibrierung über einen Austausch der Sensoren 10' durch herstellerseitig kalibrierte neue Sensoren 10". Vor Einsetzen des Systems im Life-Betrieb ist jedoch eine Kalibrierung ebenfalls des Restsystems notwendig. Hierzu werden zunächst die bereits gebrauchten Sensoren 10, 10' vom Restsystem getrennt, wie in Fig. 7 gezeigt. Sodann erfolgt die Vorbereitung des Kalibrierungsprozesses durch Erzeugen der relevanten Kalibrierungsdaten und Überspielung der relevanten Kalibrierungsdaten auf ein Speichermedium 200. Der Anschluss des Speichermediums 200 an die Erfassungs- und Kommunikationseinheit über den USB- Anschluss B. Es erfolgt die Überspielung der relevanten Kalibrierungsdaten auf die Speichereinheit 31 der Erfassungs- und Kommunikationseinheit 30, wodurch automatisch der Beginn des Kalibrierungsprozesses gelöst wird.

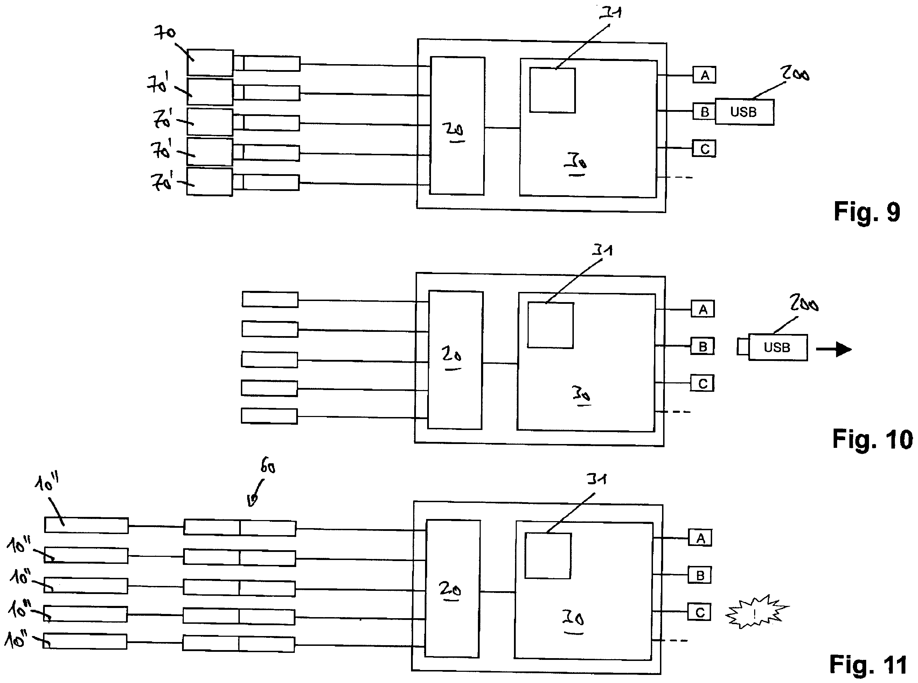

Beim Durchlaufen des Kalibrierungsprozesses wird der Nutzer aufgefordert, auf jeden weiblichen Stecker 62 der Steckverbindung 60 einen Kalibrierstecker 70, 70' anzuschließen. Dabei weist der Kalibrierstecker 70, 70' einen dem männlichen Stecker 61 entsprechenden Anschluss auf (nicht gezeigt). Nach Verbinden der Kalibrierstecker 70, 70', wie in Fig. 9 gezeigt, erfolgt die automatische Ausführung des Kalibrierungsprozesses des Restsystems, bestehend aus den zweiten Kabelverbindungen 50, der Messeinheit 20 und der Erfassungs- und Kommunikationseinheit 30 anhand der relevanten Kalibrierungsdaten auf der Speichereinheit 30 der Erfassungs- und Kommunikationseinheit 30. Nach erfolgter Kalibrierung des Restsystems werden, wie in Fig. 10 gezeigt, zunächst die Kalibrierstecker 70, 70' von den weiblichen Steckern 62 entfernt, bevor das Speichermedium 200 vom USB- Anschluss B der Erfassungs- und Kommunikationseinheit 30 getrennt wird.

Zuvor erfolgt ein Speichern der Kalibrierungsdaten auf der Speichereinheit 31 der Erfassungs- und Kommunikationseinheit 30. Die Kalibrierungsdaten, welche auf der Speichereinheit 31 gespeichert sind, können über die Anzeigevorrichtung C dem Nutzer angezeigt werden. Sodann erfolgt die Aufforderung an den Nutzer über die Anzeigevorrichtung C die werksseitig kalibrierten neuen Sensoren 10" mittels der Steckverbindung 60 an die Messeinheit 20 anzuschließen.

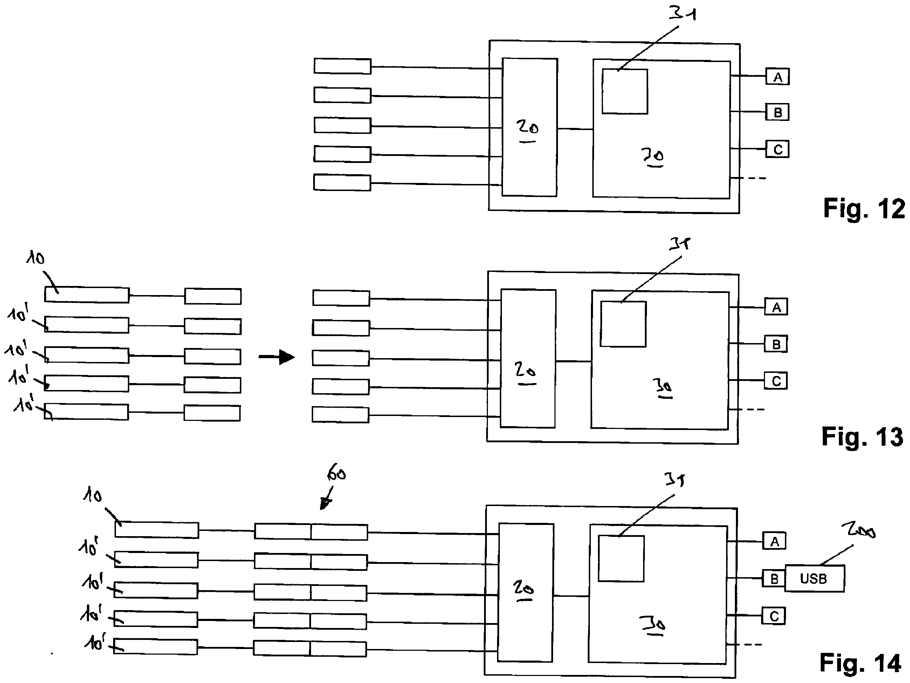

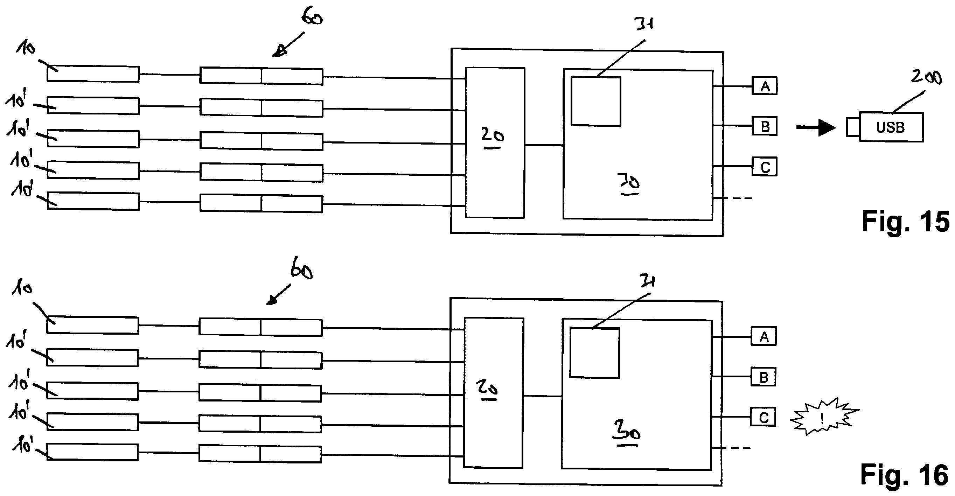

Bei einer alternativen Ausführungsform wie in Fig. 12 bis 16 gezeigt, erfolgt eine Kalibrierung der Sensoren 10, 10', der ersten Kabelverbindung 40, der Steckverbindung 60, der zweiten Kabelverbindung 50, der Messeinheit 20 und der Erfassungs- und Kommunikationseinheit 30, im nachfolgenden als Gesamtsystem bezeichnet. Vorteilhaft ist dabei, dass die bereits im Betrieb befindlichen Sensoren 10, 10' kalibriert und weiter verwandt werden können, ohne neue werkseitig kalibrierte Sensoren beziehen und an das Restsystem anschließen zu müssen.

Wie in Fig. 12 und 13 gezeigt, erfolgt zunächst ein Anschließen der Sensoren 10, 10' an die weiblichen Stecker 62 der Messeinheit 20, sofern noch nicht erfolgt. Nach erfolgreicher Verbindung der Sensoren 10, 10' mit den weiblichen Steckern 62 wird das Speichermedium 200, umfassend die relevanten Kalibrierungsdaten mit dem USB- Anschluss B der Erfassungs- und Kommunikationseinheit 30 verbunden, worauf die relevanten Kalibrierungsdaten auf die Speichereinheit 31 der Erfassungs- und Kommunikationseinheit 30 überspielt werden. Sodann beginnt der Kalibrierungsprozess automatisch und es erfolgt eine Kalibrierung des Gesamtsystems anhand der relevanten Kalibrierungsdaten auf der Speichereinheit 31 der Erfassungs- und Kommunikationseinheit 30.

Nach erfolgreichem Durchlaufen des Kalibrierungsprozesses werden die Kalibrierungsdaten auf der Speichereinheit 31 der Erfassungs- und Kommunikationseinheit 30 gespeichert und sind gemeinsam mit den aktualisierten Sensordaten auf der Anzeigevorrichtung C der Erfassungs- und Kommunikationseinheit darstellbar. Nach erfolgreicher Kalibrierung wird das Speichermedium 200 von dem USB- Anschluss B der Erfassungs- und Kommunikationseinheit getrennt und für eine weitere Verwendung aufbewahrt.

### Bezugszeichenliste

- 1 -: Sensoranordnung
- 10,10' -: Sensor (gebraucht)
- 10" -: Sensor (neu, werksseitig kalibriert)
- 20 -: Messeinheit
- 21 -: Mehrzahl an Steckplätzen
- 22 -: USB- Anschluss
- 30 -: Erfassungs- und Kommunikationseinheit
- 31 -: Speichereinheit
- 32 -: USB- Abschluss
- 40 -: erste Kabelverbindung
- 41 -: erster Kabelabschnitt
- 42 -: zweiter Kabelabschnitt
- 50 -: zweite Kabelverbindung
- 60 -: Steckverbindung
- 61 -: männlicher Stecker
- 62 -: weiblicher Stecker
- 63 -: Rasteinrichtung
- 70, 70' -: Kalibrierstecker
- 100 -: Lagervorrichtung
- 101 -: Gehäuse
- 102 -: Tür
- 103 -: Zugangsöffnung
- 104 -: Lagerraum
- 105 -: Lagereinrichtung
- 110 -: Sensoreinschub
- 111 -: Sensorhalterung
- 120 -: einzulagernde Gegenstände
- 200 -: Speichermedium

- A -: kabelgebundener Ethernet- Anschluss/ kabelloser WLAN- Anschluss
- B -: USB- Anschluss
- C -: Anzeigevorrichtung

## Patentansprüche

1. Sensoranordnung (1), umfassend mindestens einen Sensor (10), insbesondere Temperaturmesssensor, eine eine Messelektronik beinhaltende Messeinheit (20), insbesondere Temperaturmesseinheit, und eine Erfassungs- und Kommunikationseinheit (30), wobei der mindestens eine Sensor (10) mit der Messeinheit (20) über eine erste Kabelverbindung (40) verbindbar ist und die Messeinheit (20) mit der Erfassungs- und Kommunikationseinheit (30) über eine zweite Kabelverbindung (50) verbindbar ist, wobei die erste Kabelverbindung (40) in einen ersten Kabelabschnitt (41) und einen zweiten Kabelabschnitt (42) getrennt ist, wobei der erste Kabelabschnitt (41) mit dem zweiten Kabelabschnitt (42) mittels einer lösbaren Steckverbindung (60) verbindbar ist, wobei die Steckverbindung (60) einen männlichen Stecker (61) und einen weiblichen Stecker (62) aufweist, wobei der männliche Stecker (61) dem ersten Kabelabschnitt (41) und der weibliche Stecker (62) dem zweiten Kabelabschnitt (42) zugeordnet ist und die Sensoranordnung (1) mindestens einen Kalibrierstecker (70) aufweist, wobei der mindestens eine Kalibrierstecker (70) mit dem weiblichen Stecker (62) der Steckverbindung (60) lösbar verbindbar ist, wobei die Erfassungs- und Kommunikationseinheit (30) eine Speichereinheit (31) zur Aufzeichnung und Zwischenspeicherung von Informationen aufweist, und wobei die Speichereinheit (31) zur Speicherung von Kalibrierungsdaten vorgesehen ist, wobei die Sensoranordnung derart ausgerichtet ist, dass eine Überspielung von jeweils relevanten Kalibrierungsdaten von einem anschließbaren Speichermedium (200) auf die Speichereinheit (31) automatisch den Beginn eines entsprechenden Kalibrierungsprozesses auslöst, mit dem anhand der jeweiligen relevanten Kalibrierungsdaten eine Kalibrierung eines Restsystems bestehend aus der zweiten Kabelverbindung (50), der Messeinheit (20) und der Erfassungs- und Kommunikationseinheit (30) erfolgt, nachdem der Sensor (10) samt dem ersten Kabelabschnitt (41) und dem männlichen Stecker (61) von dem weiblichen Stecker (62) getrennt ist, und der mindestens eine Kalibrierstecker (70) mit dem weiblichen Stecker (62) der Steckverbindung (60) verbunden ist.

2. Sensoranordnung (1) nach Anspruch 1, **dadurch gekennzeichnet, dass** der männliche Stecker (61) mit dem weiblichen Stecker (62) über eine Rasteinrichtung (63) verbindbar ist.

3. Sensoranordnung (1) nach Anspruch 1 oder 2, **dadurch gekennzeichnet, dass** die Steckverbindung (60) als niederohmiger, einen sehr geringen elektrischen Widerstand aufweisender Stecker ausgebildet ist.

4. Sensoranordnung (1) nach einem der vorhergehenden Ansprüche, **dadurch gekennzeichnet, dass** der erste Kabelabschnitt (41) der ersten Kabelverbindung (40) mit dem mindestens einen Sensor (10) verbunden ist und der zweite Kabelabschnitt (42) der ersten Kabelverbindung (40) mit der Messeinheit (20) verbunden ist, wobei der erste Kabelabschnitt (41) kürzer als der zweite Kabelabschnitt (42) ausgebildet ist und vorzugsweise eine maximale Länge von 50 cm aufweist.

5. Sensoranordnung (1) nach einem der vorhergehenden Ansprüche, **dadurch gekennzeichnet, dass** die Messeinheit (20) eine Mehrzahl an Steckplätzen (21) zum Anschluss einer Mehrzahl von Sensoren (10'), insbesondere neun Sensoren (10'), aufweist.

6. Sensoranordnung (1) nach einem der vorhergehenden Ansprüche, **dadurch gekennzeichnet, dass** die Messeinheit (20) und die Erfassungs- und Kommunikationseinheit (30) jeweils einen USB- Anschluss (22, 32) aufweisen und mittels der zweiten Kabelverbindung (50) eine lösbare USB- Verbindung zwischen Messeinheit (20) und Erfassungs- und Kommunikationseinheit (30) herstellbar ist.

7. Sensoranordnung (1) nach einem der vorhergehenden Ansprüche, **dadurch gekennzeichnet, dass** die Erfassungs- und Kommunikationseinheit (30) einen kabelgebundenen Ethernet- und/ oder kabellosen Anschluss (A) zur Verbindung der Erfassungs- und Kommunikationseinheit (30) mit einem Rechner oder einem Netzwerk aufweist.

8. Sensoranordnung (1) nach einem der vorhergehenden Ansprüche, **dadurch gekennzeichnet, dass** die Erfassungs- und Kommunikationseinheit (30) mindestens einen USB- Anschluss (B) zum Anschluss von externen Geräten aufweist.

9. Sensoranordnung (1) nach einem der vorhergehenden Ansprüche, **dadurch gekennzeichnet, dass** an die Erfassungs- und Kommunikationseinheit (30) eine Anzeigevorrichtung (C) zur Anzeige von aufgezeichneten und zwischengespeicherten Informationen angeschlossen ist.

10. Sensoranordnung (1) nach einem der vorhergehenden Ansprüche **dadurch gekennzeichnet, dass** der mindestens eine Kalibrierstecker (1) einen integrierten Präzisionswiderstand aufweist.

11. Lagervorrichtung (100), insbesondere Kühlvorrichtung zur Einlagerung von Blutprodukten, umfassend ein wärmeisoliertes Gehäuse (101) mit einer mittels einer wärmeisolierten Tür (102) verschließbaren Zugangsöffnung (103) und mindestens einem Wärmeaggregat, wobei das Gehäuse (101) einen Lagerraum (104) umschließt und im Inneren des Gehäuses (101) mindestens eine Lagereinrichtung (105), vorzugsweise in Form einer ausziehbaren Schublade, vorgesehen ist, **dadurch gekennzeichnet, dass** die Lagervorrichtung (100) eine Sensoranordnung (1) nach einem der Ansprüche 1 bis 10 aufweist.

12. Lagervorrichtung (100) nach Anspruch 11, **dadurch gekennzeichnet, dass** im Inneren des Gehäuses (101) mindestens ein ausziehbarer Sensoreinschub (110), vorzugsweise gebildet in Form einer Lochplatte, vorgesehen ist.

13. Lagervorrichtung (100) nach Anspruch 12, **dadurch gekennzeichnet, dass** der mindestens eine Sensoreinschub (110) mindestens eine Sensorhalterung (111) zur Halterung des mindestens einen Sensors (1) aufweist.

14. Lagervorrichtung (100) nach einem der Ansprüche 12 bis 13, **dadurch gekennzeichnet, dass** die zweite Kabelverbindung (42), die Messeinheit (20) und die Erfassungs- und Kommunikationseinheit (30) in dem Gehäuse (101) der Lagervorrichtung (100) fest angeordnet sind.

15. Verfahren zur Kalibrierung und Justierung der Sensoranordnung (1) nach einem der Ansprüche 1 bis 10, **gekennzeichnet durch** die folgenden Verfahrensschritte:
(a) Vorbereitung des Kalibrierungsprozesses durch Erzeugen der relevanten Kalibrierungsdaten und Überspielung der relevanten Kalibrierungsdaten auf ein Speichermedium (200);
(b) Anschließen des Speichermediums (200) an die Erfassungs- und Kommunikationseinheit (30) und Überspielung der relevanten Kalibrierungsdaten auf die Speichereinheit (31) der Erfassungs- und Kommunikationseinheit (30) und automatischer Beginn des Kalibrierungsprozesses;
(c) Entfernen des mindestens einen an die Messeinheit (20) angeschlossenen Sensors (10);
(d) Anschließen des mindestens einen Kalibriersteckers (70) an den weiblichen Stecker (62) der Steckverbindung (40) des zweiten Kabelabschnitts (42) und automatische Detektierung des mindestens einen Kalibriersteckers (70);
(e) Automatische Ausführung des Kalibrierungsprozesses der zweiten Kabelverbindung (50), der Messeinheit (20) und der Erfassungs- und Kommunikationseinheit (30) anhand der relevanten Kalibrierungsdaten auf der Speichereinheit (31) der Erfassungs- und Kommunikationseinheit (30);
(f) Entfernen des mindestens einen Kalibriersteckers (70) und Verbinden des mindestens einen Sensors (10) an die Messeinheit (20) und automatische Detektierung des mindestens einen Sensors (10);
(g) Speichern der Kalibrierungsdaten auf der Speichereinheit (31) der Erfassungs- und Kommunikationseinheit (30) und Anzeigen der aktualisierten Sensordaten auf der Anzeigevorrichtung (C) der Erfassungs- und Kommunikationseinheit (30); und
(h) Entfernen des Speichermediums (200) von der Erfassungs- und Kommunikationseinheit (300).

16. Verfahren zur Kalibrierung und Justierung der Sensoranordnung (1) nach Anspruch 15, **dadurch gekennzeichnet, dass** der mindestens eine Sensor (10) durch einen herstellerseitig kalibrierten neuen Sensor (10") ausgetauscht wird.

## Claims

1. Sensor arrangement (1) comprising at least one sensor (10), in particular temperature sensor, a measurement unit (20), in particular temperature measurement unit, comprising measurement electronics, and a data entry and communication unit (30), wherein the at least one sensor (10) is connectable with the measurement unit (20) via a first cable connection (40) and the measurement unit (20) is connectable with the data entry and communication unit (30) via a second cable connection (50), wherein the first cable connection (40) is divided into a first cable section (41) and a second cable section (42), wherein the first cable section (41) is connectable with the second cable section (42) by means of a releasable plug connection (60), wherein the plug connection (60) has a male connector (61) and a female connector (62), wherein the male connector (61) is associated with the first cable section (41) and the female connector (62) is associated with the second cable section (42), and the sensor arrangement (1) has at least one calibration connector (70), wherein the at least one calibration connector (70) is releasably connectable with the female connector (62) of the plug connection (60), wherein the data entry and communication unit (30) has a storage unit (31) for the display and intermediate storage of information, and wherein the storage unit (31) is provided for the storage of calibration data, wherein the sensor arrangement is oriented in such a manner that a transfer of respectively relevant calibration data from a connectable storage medium (200) to the storage unit (31) automatically initiates the start of a corresponding calibration process, with which a calibration of a residual system consisting of the second cable connection (50), the measurement unit (20) and the data entry and communication unit (30) occurs on the basis of the respective relevant calibration data after the sensor (10) together with the first cable section (41) and the male connector (61) is separated from the female connector (62), and the at least one calibration connector (70) is connected with the female connector (62) of the plug connection (60).

2. Sensor arrangement (1) according to claim 1, **characterised in that** the male connector (61) is connectable with the female connector (62) by means of a locking device (63).

3. Sensor arrangement (1) according to claim 1 or 2, **characterised in that** the plug connection (60) is configured as a low-impedance connector having a very low electrical resistance.

4. Sensor arrangement (1) according to one of the preceding claims, **characterised in that** the first cable section (41) of the first cable connection (40) is connected with the at least one sensor (10) and the second cable section (42) of the first cable connection (40) is connected with the measurement unit (20), wherein the first cable section (41) is configured shorter than the second cable section (42) and preferably has a maximum length of 50 cm.

5. Sensor arrangement (1) according to one of the preceding claims, **characterised in that** the measurement unit (20) has a multiplicity of plug-in positions (21) for connection of a multiplicity of sensors (10'), in particular nine sensors (10').

6. Sensor arrangement (1) according to one of the preceding claims, **characterised in that** the measurement unit (20) and the data entry and communication unit (30) respectively have a USB connection (22, 32) and a releasable USB connection can be created between the measurement unit (20) and the data entry and communication unit (30) by means of the second cable connection (50).

7. Sensor arrangement (1) according to one of the preceding claims, **characterised in that** the data entry and communication unit (30) has a wired Ethernet and/or wireless connection (A) for connecting the data entry and communication unit (30) to a computer or a network.

8. Sensor arrangement (1) according to one of the preceding claims, **characterised in that** the data entry and communication unit (30) has at least one USB connection (B) for the connection of external devices.

9. Sensor arrangement (1) according to one of the preceding claims, **characterised in that** a display device (C) is connected to the data entry and communication unit (30) for the display of recorded and intermediate stored information.

10. Sensor arrangement (1) according to one of the preceding claims, **characterised in that** the at least one calibration connector (70) has an integrated precision resistor.

11. Storage device (100), in particular cooling device for storing blood products, comprising a heat-insulated housing (101) with an access opening (103) closable by means of a heat-insulated door (102) and at least one heat unit, wherein the housing (101) encloses a storage space (104) and a storage arrangement (105), preferably in the form of a pull-out drawer, is provided in the interior of the housing (101), **characterised in that** the storage device (100) has a sensor arrangement (1) according to one of claims 1 to 10.

12. Storage device (100) according to claim 11, **characterised in that** at least one pull-out sensor insert (110), preferably configured in the form of a perforated plate, is provided in the interior of the housing (101).

13. Storage device (100) according to claim 12, **characterised in that** the at least one sensor insert (110) has at least one sensor holder (111) for holding the at least one sensor (10).

14. Storage device (100) according to one of claims 12 to 13, **characterised in that** the second cable connection (42), the measurement unit (20) and the data entry and communication unit (30) are fixedly arranged in the housing (101) of the storage device (100).

15. Method for calibrating and adjusting the sensor arrangement (1) according to one of claims 1 to 10, **characterised by** the following method steps:
a) preparation of the calibration process by generating the relevant calibration data and transferring the relevant calibration data to a storage medium (200);
b) connection of the storage medium (200) to the data entry and communication unit (30) and transfer of the relevant calibration data to the storage unit (31) of the data entry and communication unit (30) and automatic start of the calibration process;
c) removal of the at least one sensor (10) connected to the measurement unit (20);
d) connection of the at least one calibration connector (70) to the female connector (62) of the plug connection (40) of the second cable section (42) and automatic detection of the at least one calibration connector (70);
e) automatic implementation of the calibration process of the second cable connection (50), the measurement unit (20) and the data entry and communication unit (30) on the basis of the relevant calibration data on the storage unit (31) of the data entry and communication unit (30);
f) removal of the at least one calibration connector (70) and connection of the at least one sensor (10) to the measurement unit (20) and automatic detection of the at least one sensor (10);
g) storage of the calibration data on the storage unit (31) of the data entry and communication unit (30) and display of the updated sensor data on the display device (C) of the data entry and communication unit (30); and
h) removal of the storage medium (200) from the data entry and communication unit (300).

16. Method for calibrating and adjusting the sensor arrangement (1) according to claim 15, **characterised in that** the at least one sensor (10) is replaced by a new sensor (10") calibrated by the manufacturer.

## Revendications

1. Dispositif de capteur (1) comprenant au moins un capteur (10), notamment un capteur de température, une unité de mesure (20), notamment une unité de mesure de température, comprenant de l'électronique de mesure, et une unité de communication et d'entrée de données (30), dans lequel l'au moins un capteur (10) est connectable à l'unité de mesure (20) via une première connexion de câble (40) et l'unité de mesure (20) est connectable à l'unité de communication et d'entrée de données (30) via une seconde connexion de câble (50), où la première connexion de câble (40) est divisée en une première section de câble (41) et une second section de câble (42), où la première section de câble (41) est connectable à la seconde section de câble (42) au moyen d'un connecteur détachable (60), où le connecteur détachable (60) a une prise mâle (61) et une prise femelle (62), où la prise mâle (61) est associée à la première section de câble (41) et la prise femelle (62) est associée à la seconde section de câble (42), et le dispositif de capteur (1) a au moins un connecteur d'étalonnage (70), où l'au moins un connecteur d'étalonnage (70) est connectable de manière détachable à la prise femelle (62) du connecteur (60), où l'unité de communication et d'entrée de données (30) a une unité de stockage (31) pour l'affichage et le stockage intermédiaire d'information, et où l'unité de stockage (31) est mise à disposition pour le stockage de données d'étalonnage, où le dispositif de capteurs est orienté de telle manière qu'un transfert de données d'étalonnage respectivement pertinentes à partir d'un moyen de stockage connectable (200) à l'unité de stockage (31) démarre automatiquement le début d'un procédé d'étalonnage correspondant, avec lequel un étalonnage d'un système résiduel consistant en la seconde connexion de câble (50), l'unité de mesure (20) et l'unité de communication et d'entrée de données (30) se produit sur base des données d'étalonnage respectivement pertinentes après que le capteur (10) ensemble avec la première section de câble (41) et la prise mâle (61) soit séparé de la prise femelle (62), et l'au moins un connecteur d'étalonnage (70) est connecté à la prise femelle (62) du connecteur (60).

2. Dispositif de capteur (1) selon la revendication 1, **caractérisé en ce que** la prise mâle (61) est connectable à la prise femelle (62) au moyen d'un dispositif de verrouillage (63).

3. Dispositif de capteur (1) selon la revendication 1 ou 2, **caractérisé en ce que** le connecteur (60) est configuré en tant que connecteur de faible impédance ayant une très faible résistance électrique.

4. Dispositif de capteur (1) selon l'une des revendications précédentes, **caractérisé en ce que** la première section de câble (41) de la première connexion de câble (40) est connectée à l'au moins un capteur (10) et la seconde section de câble (42) de la première connexion de câble (42) de la première connexion de câble (40) est connectée à l'unité de mesure (20), dans lequel la première section de câble (41) est configurée plus courte que la seconde section de câble (42) et a de préférence une longueur maximale de 50 cm.

5. Dispositif de capteur (1) selon l'une des revendications précédentes, **caractérisé en ce que** l'unité de mesure (20) a une multitude de positions de connexion (21) pour connecter une multitude de capteurs (10'), notamment neuf capteurs (10').

6. Dispositif de capteur (1) selon l'une des revendications précédentes, **caractérisé en ce que** l'unité de mesure (20) et l'unité de communication et d'entrée de données (30) ont respectivement une connexion USB (22,23) et une connexion USB détachable peut être créée entre l'unité de mesure et l'unité de communication et d'entrée de données (30) au moyen de la seconde connexion de câble (50).

7. Dispositif de capteur (1) selon l'une des revendications précédentes, **caractérisé en ce que** l'unité de communication et d'entrée de données (30) a une connexion Ethernet câblée et/ou une connexion sans fil (A) pour connecter l'unité de communication et d'entrée de données (30) à un ordinateur ou un réseau.

8. Dispositif de capteur (1) selon l'une des revendications précédentes, **caractérisé en ce que** l'unité de communication et d'entrée de données (30) a au moins une connexion USB (B) pour la connexion de dispositifs externes.

9. Dispositif de capteur (1) selon l'une des revendications précédentes, **caractérisé en ce qu'**un dispositif d'affichage (C) est connecté à l'unité de communication et d'entrée de données (30) pour l'affichage d'information enregistrée et d'information intermédiaire stockée.

10. Dispositif de capteur (1) selon l'une des revendications précédentes, **caractérisé en ce que** l'au moins un connecteur d'étalonnage (70) a une résistance de précision intégrée.

11. Dispositif de stockage (100), notamment un dispositif de refroidissement pour stocker des produits sanguins, comprenant une chambre isolée de la chaleur (101) ayant une ouverture d'accès (103) fermable au moyen d'une porte isolée de la chaleur (102) et au moins une unité de chaleur, dans lequel la chambre (101) enveloppe un espace de stockage (104) et un agencement de stockage (105), de préférence sous la forme d'un tiroir coulissant, est mis à disposition à l'intérieur de la chambre (101), **caractérisé en ce que** le dispositif de stockage (100) a un dispositif de capteur (1) selon l'une des revendications 1 à 10.

12. Dispositif de stockage (100) selon la revendication 11, **caractérisé en ce qu'**au moins une fente de capteurs coulissante (110), de préférence configurée sous la forme d'un plateau perforé, est mise à disposition à l'intérieur de la chambre (101).

13. Dispositif de stockage (100) selon la revendication 12, **caractérisé en ce que** l'au moins une fente de capteurs (110) a au moins un support de capteurs (111) pour maintenir l'au moins un capteur (10).

14. Dispositif de stockage (100) selon l'une des revendications 12 à 13, **caractérisé en ce que** la seconde connexion de câble (42), l'unité de mesure et l'unité de communication et d'entrée de données (30) sont disposées de manière fixe dans la chambre (101) du dispositif de stockage (100).

15. Procédé d'étalonnage et d'ajustement du dispositif de capteur (1) selon l'une des revendications 1 à10, **caractérisé en ce qu'**il comprend les étapes de procédé suivantes :
a) la préparation du procédé d'étalonnage par la génération de données d'étalonnage pertinentes et le transfert des données d'étalonnage pertinentes vers un moyen de stockage (200) ;
b) la connexion du moyen de stockage (200) à l'unité de communication et d'entrée de données (30) et le transfert des données d'étalonnage pertinentes vers l'unité de stockage (31) de l'unité de communication et d'entrée de données (30) et le démarrage automatique du procédé d'étalonnage ;
c) le retrait de l'au moins un capteur (10) connecté à l'unité de mesure (20) ;
d) la connexion de l'au moins un connecteur d'étalonnage (70) à la prise femelle (62) du connecteur (40) de la seconde connexion de câble (42) et la détection automatique de l'au moins un connecteur d'étalonnage (70) ;
e) l'implémentation automatique du procédé d'étalonnage de la seconde connexion de câble (50), de l'unité de mesure (20) et de l'unité de communication et d'entrée de données (30) sur base des données d'étalonnage pertinentes sur l'unité de stockage (31) de l'unité de communication et d'entrée de données (30) ;
f) le retrait de l'au moins un connecteur d'étalonnage (70) et la connexion de l'au moins un capteur (10) à l'unité de mesure (20) et la détection automatique de l'au moins un capteur (10) ;
g) le stockage des données d'étalonnage à l'unité de stockage (31) de l'unité de communication et d'entrée de données (30) et l'affichage des données du capteur mises à jour sur le dispositif d'affichage (C) de l'unité de communication et d'entrée de données (30) ; et
h) le retrait du moyen de stockage (200) de l'unité de communication et d'entrée de données (30).

16. Procédé d'étalonnage et d'ajustement du dispositif de capteur (1) selon la revendication 15, **caractérisé en ce que** l'au moins un capteur (10) est remplacé par un nouveau capteur (10") étalonné par le fabricant.
